# EUROPEAN PATENT APPLICATION

(11) **EP 4 286 207 A1**
(43) Date of publication of application: **06.12.2023**
(21) Application number: 22176420.2
(22) Date of filing: 31.05.2022
(51) Int. Cl.: B60L 8/00

(54) **ENERGY MANAGEMENT FOR A VEHICLE HAVING PHOTOVOLTAICS AT A VEHICLE BODY**

(71) Applicant: Sono Motors GmbH, 80935 München (DE)
(72) Inventor: BEYFUSS, Bastian, 80935 Munich (DE); STOCKS, Oliver, 80935 Munich (DE)
(74) Representative: Qip Patentanwälte Dr. Kuehn & Partner mbB

(57) **Abstract**

The invention relates to an energy management for a vehicle having photovoltaics, PV, at a vehicle body. A method embodiment comprises accepting data (111) representing prospective ambient conditions during a parking time of the vehicle; selecting, based on the accepted data, a positioning option from at least two positioning options (114, 116, 118) for the vehicle, wherein the at least two positioning options differ from each other in a prospective amount of direct sunlight impinging on the vehicle during the parking time; and providing (120, 122) the selected positioning option for achieving, with regard to an energy performance of the PV integration, an optimized energy balance.

## Description

### FIELD OF THE INVENTION

The present disclosure relates to an energy management technique for a vehicle, and in particular to an energy management method for a vehicle having photovoltaics, PV, at a vehicle body. The present disclosure further relates to a computer program product for implementing said method, a computer readable medium storing said computer program product, and an energy management module for a vehicle having PV at a vehicle body.

### TECHNICAL BACKGROUND

Electric vehicles gain more and more market shares and there is therefore an increasing focus on various technological improvements for such vehicles. Electric vehicles are understood to include any kind of vehicles which are equipped with and are or can be driven by one or more electric motors, and this includes for example so-called hybrid vehicles. Vehicles are known that have photovoltaics arranged therewith, specifically at a vehicle body. The photovoltaic integration, photovoltaics or "PV integration" for short may comprise photovoltaic panels, solar cells, etc. for converting incident light into electrical energy, where the energy may be provided to a battery of the vehicle.

An energy management is required for such vehicles which includes managing energy provisioning from external sources such as via an external power grid as well as from the PV integration, and managing energy consumption by the electric motor or motors for driving. Energy may also be consumed by heating or cooling required for the vehicle's cabin, the battery, etc.

For vehicles having a PV integration, generally the benefit of the solar charging capabilities should be maximised. Charging strategies should minimize costs for charging from the grid.

### SUMMARY

There is a need for improved energy management techniques for vehicles, in particular for vehicles having photovoltaics at the vehicle body.

Such need is satisfied by the subject-matter of the independent claims. Further advantageous embodiments are defined in the dependent claims, described in the following specification and illustrated in the accompanying figures.

According to a first aspect of the present disclosure, an energy management method for a vehicle having photovoltaics, PV, at a vehicle body is proposed. The method comprises accepting data representing prospective ambient conditions during a parking time of the vehicle; selecting, based on the accepted data, a positioning option from at least two positioning options for the vehicle, wherein the at least two positioning options differ from each other in a prospective amount of direct sunlight impinging on the vehicle during the parking time; and providing the selected positioning option for achieving, with regard to an energy performance of the PV integration, an optimized energy balance.

The accepted data can represent prospective ambient outdoor conditions. For example, the data can be related to temperature conditions, wind conditions, cloud conditions, a sun position or solar path during the prospective parking time, etc. According to embodiments, the accepted data can comprise weather data, such as data representing current weather conditions and/or future or forecast weather conditions. According to embodiments, accepting data can comprise accepting data provided by a weather forecast database.

According to embodiments, the method comprises calculating an energy amount which can prospectively be provided by the PV integration based on the accepted data. For example, the accepted data can represent a performance of the PV integration of the vehicle. The energy amount can be calculated based on the parking time or parking duration, an intensity of sunlight impinging on the vehicle during the parking time, a prospective orientation of the vehicle relative to the sun position, the performance of the PV integration, etc.

According to some embodiments, the method further comprises that the calculated energy amount is reserved for solar charging, as opposed to charging from a power grid, a charging station, etc. According to some embodiments, the method further comprises implementing an energy and charging strategy including a charging schedule according to the calculated energy amount. For example, the system can calculate a preferred time slot and optimal charge reserve for solar charging and implement the calculated energy and charging strategy including an according charging schedule.

According to various embodiments, the method further comprises calculating the energy balance for at least one of the different positioning options. For example, the energy balance can be calculated for each positioning option or a subset of the available positioning options.

According to embodiments, the energy balance of the vehicle takes into account desired temperature conditions for at least one of a battery and a cabin of the vehicle. For example, the desired temperature conditions can be represented by one or more threshold temperature values, a range of desired temperature values, etc. For example, the desired temperature conditions can comprise a minimum desired ambient temperature for the battery and/or a maximum desired temperature of the cabin. For example, data representing the desired temperature conditions can be predefined or pre-set by a manufacturer of the vehicle and/or battery, service provider, etc. and can be stored in the vehicle, a cloud server, an app, etc.

According to embodiments, the method further comprises calculating an energy demand for at least one of battery heating, cabin heating and cabin cooling. For example, said energy demand can be calculated based on one or more of accepted data representing, for example, a current temperature related to the battery and/or the cabin, weather forecast data, a user input of a preferred cabin temperature, etc.

According to various embodiments, the positioning options may include a positioning under open sky, under direct sunlight, with indirect sunlight, under diffuse light conditions, reflected light conditions, wind-protected, shaded, indoor, garage. Any positioning option may represent an abstract or a specific positioning, e.g., a parking place which is predefined as an abstractum, or a specific, e.g., available, parking place nearby the vehicle.

According to embodiments, a positioning under open sky may be defined by direct sunlight impinging onto the entire vehicle during the parking time. According to some of these embodiments, any additional amount of diffuse light, reflected light, etc. may be ignored or assumed negligible. According to some embodiments, a shaded positioning option may represent a positioning where direct sunlight is entirely prevented to impinge onto the vehicle during the parking time. According to some of these embodiments, an amount of diffuse light, reflected light, etc. may be assumed to impinge on the vehicle.

According to various embodiments, the positioning options can include at least one of an indoor positioning, such as a positioning under roof in a parking house or carport, etc., a wind-protected positioning, a positioning in direct sunlight, indirect sunlight, a positioning in diffuse light conditions, reflected light conditions such as near to reflecting surfaces such as a water surface, glass front, etc.

According to embodiments, the positioning options may be related to each other, such as being nested, ranked or sorted relative to each other, for example by hierarchy. According to one example, an open-sky positioning may include one or more direct sunlight positionings according to direct sunlight impinging to the entire vehicle or only parts thereof (more specifically, the PV integration thereof), impinging only for some fraction of the parking time, etc. Various indirect sunlight positioning options can represent a partly cloud-covered sky, fully cloud-covered sky, fog, etc. According to another example, the shaded positioning option may include various positioning options with a limited amount of direct sunlight, no direct sunlight, but varying amounts of diffuse or reflected light. According to other examples, the shaded positioning may include one or more of an indoor positioning, a garage positioning, a carport positioning, etc. and these may represent a positioning with a low amount or without any direct or indirect sunlight, but may differ between each other in one or more of predefined or measured temperature conditions, wind conditions, etc. Various indoor positioning options can also be contemplated which differ from each other in an amount of artificial light impinging on the parked vehicle.

According to some embodiments, the method comprises selecting a shaded positioning based on the prospective ambient (outdoor) conditions for an open-sky positioning resulting in a negative energy balance. For example, prospective cabin temperatures during or after the parking time may exceed a threshold temperature.

According to other embodiments, the method comprises selecting an indoor positioning based on the prospective ambient (outdoor) conditions for an open-sky positioning resulting in a negative energy balance. For example, prospective battery temperatures during or after the parking time may fall below a threshold temperature.

According to various embodiments, providing the selected positioning option can comprise presenting a recommendation to a driver of the vehicle. For example, an indication can be presented to the driver to choose a parking place according to the selected positioning option, such as placing the vehicle under open sky, shaded, indoors, in a garage, a carport, wind-protected, in direct sunlight, in indirect sunlight, in diffuse light conditions, in reflected light conditions, such as near a glass front, etc. Multiple positioning options may be presented, for example according to the respectively calculated energy balances. According to embodiments, indications of one or more available particular parking places may be presented according to the one or more selected positioning options.

Additionally or alternatively, providing the selected positioning option can comprise controlling an autonomous driving of the vehicle to place the vehicle according to the selected positioning option.

Generally, embodiments of the methods proposed herein may be computer-implemented. For example, any one or more steps may be executed in a controller, processing unit such as a central processing unit, CPU, etc. According to a further aspect of the present disclosure, a computer program product is proposed which comprises program code portions for at least one of performing and controlling one or more of the methods described herein when the computer program product is executed on one or more computing devices.

According to another aspect of the present disclosure, the computer program product may be stored on a computer readable medium, such as a permanent or re-writeable memory within or associated with a computing device, such as flash memory, ROM, PROM, EPROM, or a removable CD-ROM, DVD or USB-stick. Alternatively, the computer readable medium may be a stationary device such as another computer or server, such computer or server possibly being part of a data cloud, wherein the computer program may be provided for download from such computer or server, for example via a data network such as the Internet and/or a LAN or a communication line such as a telephone line or wireless link.

According to a still further aspect of the present disclosure, an energy management module is proposed for a vehicle having photovoltaics, PV, at a vehicle body. The energy management module comprises a component configured for accepting data representing prospective ambient conditions during a parking time of the vehicle; a component configured for selecting, based on the accepted data, a positioning option from at least two positioning options for the vehicle, wherein the at least two positioning options differ from each other in a prospective amount of direct sunlight impinging on the vehicle during the parking time; and a component configured for providing the selected positioning option for achieving, with regard to an energy performance of the PV integration, a positive energy balance.

The energy management module can be a stand-alone module or can be integrated within a more comprehensive energy management functionality for the vehicle.

It shall be noted that features and advantages of various embodiments are described herein partly with respect to a method and partly with respect to a module or component. One skilled in the art readily recognizes that a feature or features may be suitably transferred from one embodiment to other and features may be modified, adapted, combined and/or replaced, etc. in order to arrive at further embodiments.

### BRIEF DESCRIPTION OF THE DRAWINGS

Further exemplary embodiments will be described in detail with reference to the accompanying drawings, wherein:
- Fig. 1: is a functional block diagram schematically illustrating an embodiment of an energy management module for a vehicle; and
- Fig. 2: is a flow diagram illustrating an operation of the energy management module of Fig. 1.

### DESCRIPTION OF PREFERRED EMBODIMENTS

Neither the drawings nor the description shall be interpreted as limiting the invention.

If not explicitly stated otherwise, the figures are schematic and not to scale. Reference signs in the claims should not be construed as limiting the scope of the claims. Same reference signs refer to same or similar features.

It should be noted that any of the terms "comprising" or "including" as used herein does not exclude other elements or steps. Use of "a" or "an" does not exclude multiple or a plurality.

Various elements described in association with different embodiments may nevertheless be combined.

The term "vehicle" as used herein may refer to one or more vehicles such as passenger cars, taxis, vans, busses, mobile homes or camping cars, but also freight vehicles or lorries, etc., and may include manned vehicles but also unmanned vehicles. Vehicles may even be considered trains such as trams, ships, or airplanes.

Particular consideration herein is to electric vehicles, including hybrid vehicles, which are equipped with one or more electric motors to drive the vehicle. Such vehicle may have one or more further consumers on-board, for example for cabin heating or cooling, battery heating or cooling, light system, entertainment system, etc.

A photovoltaic arrangement, sometimes referred to as "photovoltaics" or "PV" herein for short, may comprise only one solar cell, but may typically comprise a multiplicity of photovoltaic cells, wherein the or each photovoltaic cell is configured for converting incident or impinging light into electrical energy. One or more photovoltaic cells may be arranged in one or more photovoltaic panels. In the following, the term "photovoltaic/s" may be abbreviated by "PV". PV cells may also be referred to as solar cells.

Such photovoltaics may also be arranged at a vehicle, for example a vehicle body, wherein "arranged at" may include that the photovoltaics is arranged on, embedded within, and/or forms part of the vehicle body, e.g., the vehicle roof and/or side parts. However, photovoltaics may also be included in advertising roof signs for taxis, etc. Photovoltaics may also be arranged at a trailer of a motored vehicle, such as at bus trailers.

Electrical energy or power generated by the photovoltaics may be stored in one or more electrical storage components such as one or more batteries, battery packs, etc. onboard the vehicle. The electrical energy generated by the photovoltaics and/or stored in the battery or batteries may be used for supplying power to one or more consumers, for example on-board the vehicle, more specifically one or more driving motors thereof, but also to other consumers such as for a battery cooling or heating, cabin cooling or heating, etc.

A photovoltaic yield or PV yield may generally be calculated or estimated for a given PV arrangement or solar cell arrangement, for example for a stationary arrangement such as a solar farm or an arrangement on a building or buildings. Such calculation may include the performance of the PV arrangement, which amongst others depends on the light impinging thereon, and this may also include the geographical latitude of the given location, specifics of the arrangement such as total area, inclination angles of all or parts of the arrangement, etc.

An energy balance as calculated by embodiments considered herein may comprise a balancing of an input energy and an output energy, wherein the input energy may in particular comprise energy provided by a PV integration of a vehicle during a parking time thereof, and may also be referred to as positive energy, energy gain, yield, provisioned energy, etc. The output energy may in particular comprise an energy demand during the parking time for one or more of cabin heating, cabin cooling, battery heating and battery cooling, but may also include consumers for light, entertainment, etc, for example if the parking time is before a red traffic light, closed gate, etc.

More generally, the output energy may be understood as comprising any kind of energy required to be spent to enable the PV integration providing the input energy during the parking time, and may therefore be referred to herein as negative energy, energy loss, etc. For example, in order to optimize a PV yield of a vehicle's solar integration, an open-sky positioning or direct sunlight positioning may be seen preferrable. However, such positioning may imply high cabin temperatures, for example in case of ambient conditions typical for summer. A required cabin cooling during, at the end, or after the parking time may result in an output energy exceeding the input energy, i.e., an energy balance becomes negative if said energy balance is understood as subtracting the amount of output energy from the amount of input energy. To avoid such negative energy balance, a different positioning may be preferrable, for example a shaded positioning, under trees, a roof, under diffuse light conditions, etc.

As another example, an open-sky positioning may imply low battery temperatures, for example in case of ambient conditions typical for winter. A required heating of the battery may result in a negative energy balance. A different positioning option, if available, may be preferrable to avoid or at least minimize a negative energy balance, for example a wind-protected positioning, under roof, indoor, a garage, etc.

Whether the input energy is provided for battery storage and/or immediate consumption may or may not be considered as influencing the energy balance, where it may be contemplated that a storage in the battery is less efficient than an immediate consumption.

Vehicles as considered herein may be controlled, e.g., driven by humans, where the driver may be assisted by driving assistants and/or parking assistants. Other vehicles may be driven or controlled fully or in part autonomously, i.e., by an autonomous driving or parking control system.

It shall be noted that "parking" of a vehicle may include any kind of parking, placing, or stopping of the vehicle for some time span, i.e. the parking duration, which may include situations on a parking lot such as in any kind of parking area including a car park, bus park, parking areas for public vehicles such as garbage trucks or trams, or for a vehicle fleet of a company, but also a parking deck of a car park building such as being not or partly or fully covered by roof but with openings in or open side walls where sunlight can enter and impinge on parked vehicles.

However, parking situations partly or fully with reflected, diffuse, and/or artificial light impinging on a vehicle, such as in a building, a parking duration extending fully or partly in the night, etc. are not intended to be excluded in the present disclosure.

A parking situation may even include a "parking" before a red traffic light or a closed gate of a railway crossing, etc., for example when the vehicle approaches such a halting situation and there are options for choosing one of different lanes, for example, one lane being shaded and another lane being in direct sunlight, reflected light from a glass front of a building, etc.

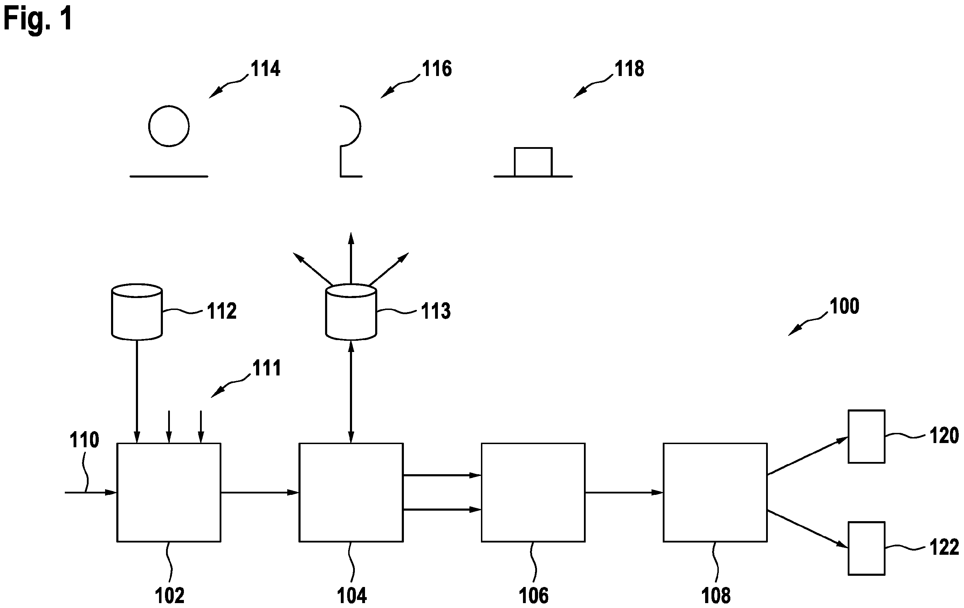

Fig. 1 is a functional block diagram which schematically illustrates an exemplary embodiment of an energy management module 100 for a vehicle (not shown). The module 100 can be part of an energy management system which includes a battery management, a charging management such as for managing a charging from a power grid, from a PV integration of the vehicle, etc. Functionalities of the module 100 may be implemented in the vehicle, remote from the vehicle, or according to any combination thereof. For example, part or all of the functionality may be implemented as a cloud service and accessed as needed by a client implemented onboard the vehicle and/or on a personal mobile device of a driver of the vehicle. Such service may be operated by a manufacturer of the vehicle, a lease provider of the vehicle, an operator of a parking lot, a stand-alone provider of parking assistance, etc.

The energy management module 100 is illustrated in Fig. 1 as comprising an input or trigger component 102, a calculation component 104, a selection component 106 and an output or provisioning component 108.

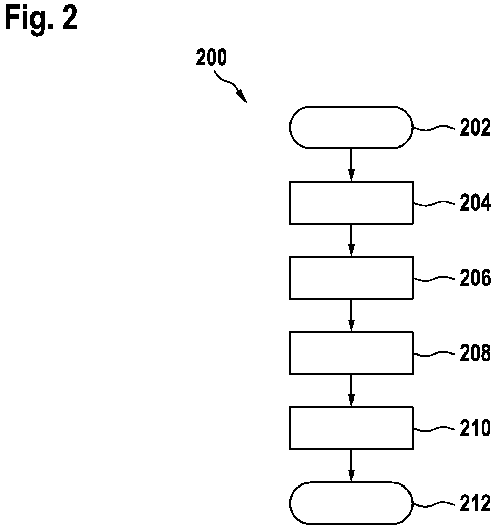

Fig. 2 is a flow diagram illustrating an operation 200 of the energy management module 100 and in interworking of the components thereof. In step 202, the input or trigger component 102 is triggered by an input 110, such as an indication that the vehicle is going to be parked, wherein such indication may result from driver input, pattern recognition, driving behaviour, current location, etc.

In step 204, the input component 102 operates to accept various data 111 representing prospective ambient conditions during a parking time of the vehicle. Specifically, the component 102 may access a weather forecast service or database 112 to retrieve forecast data regarding a predicted development of temperature, wind intensity and direction, cloudiness of the sky, wherein the forecast data should cover at least part of a prospective parking time or parking duration at or near or around a current vehicle location.

In a step 206, the input component 102 provides the collected data to calculation component 104 which operates on the basis of said data to calculate various energy amounts for different positioning options. In a specific example discussed here, the component 104 may calculate an input energy and an output energy for each of different positioning options, namely an open-sky positioning option 114, a shaded positioning option 116 and an indoor or garage positioning option 118.

The positioning options can be understood as abstract or generic options, such as being defined in a database 113, wherein parameters which characterize the according positioning, in particular relevant prospective ambient conditions relevant for calculating an energy balance for said positioning, have predefined values, such as standard values, default values, etc., for example for an amount of sunlight available according to the current time of the year, etc. The positioning options can also be understood as specific options, such as a specific parking place nearby under open sky, shaded under a tree, inside a parking building, etc., and some or all of the parameters may represent the current ambient conditions of these positioning options or parking places, as according to the data collected by the input component 102. It is noted that combinations of abstract and specific positionings can be contemplated, such as a plurality of available open-sky parking places on an empty parking lot, which are characterized by an identical or nearly identical set of parameters representing current or forecast temperature, sunlight intensity, etc.

As a specific example, the open-sky positioning 114 is assumed to represent a generic or a specific parking place under open sky, without shading by trees, roof, etc., such that sunlight directly impinges during daytime onto the parked vehicle in the absence of clouds. As another example, the shaded positioning or positioning option 116 may represent a parking place under a tree or trees, where there may be no direct sunlight, but a considerable amount of reflected light and/or diffuse light may arrive at the vehicle's PV integration from the ambience or environment thereof. The shaded positioning option 116 may also be assumed to represent a parking place under a roof with open sidewalls, such as in a car port, parking building, etc.

As a still further example, the indoor or garage positioning option 118 may be assumed to have no direct, indirect, reflected, or diffuse light, but may be wind-protected and/or having a temperature independent of an outdoor temperature and in a range proper for a battery of an electric vehicle to not require heating or cooling.

Specifically, the calculation component 104 can calculate a prospective input energy for some of the positioning options, i.e., the amount of energy which will prospectively be provided by the PV integration of the vehicle during the parking time. Assuming as a simple example a clear sky with no clouds (according to the forecast data provided by the database 112), and the sun being high in the sky, the open-sky or direct sunlight positioning option 114 may lead to a high PV yield, which is in particular higher than the intermediate energy amount which can prospectively be provisioned by the PV integration in the shaded positioning 116, where such intermediate energy amount in turn may be higher than the low energy amount provisioned by the PV integration according to positioning option 118, where the low energy amount may be zero, or may be slightly higher than zero in a permanently illuminated parking house, depending on the performance of the PV integration.

Further, specifically, the calculation component 104 may calculate the output energy for each of the positioning options. According to one example, on a typical summer day, the weather data and/or other data may result, for the open-sky positioning 114, in a high cabin temperature which requires active cooling during part or all of the parking time and/or after leaving the parking position. Such output energy may in particular higher as compared to that of the shaded position 116 where a lower cabin temperature may require less cooling if at all. As another example, on a typical winter day, the open-sky positioning 114 may result in a relatively high energy demand for heating the battery, wherein such demand may be lower for the shaded or wind-protected positioning option 116, whereas for the indoor or garage positioning 118, a constant ambient temperature over the year may be assumed which would not require any heating of the battery also in winter.

Many more such calculations can readily be contemplated for the illustrated positioning options as well as for many further such options as indicated herein or which may be of practical relevance as according to the understanding of the skilled person.

Referring again to Fig. 2, in step 208, input and output energy (or positive and negative energy, energy gain and loss, yield and loss) as calculated in step 206 for each of the positioning options are provided to the balancing, ranking and selecting component 106. Specifically, the component 106 operates to calculate for some or all of the positioning options the energy balance, and may pre-select those options having optimum energy balance, preferably at least a positive energy balance. It is recalled that the energy balance can be understood as indicating the amount of output energy required to enable the provisioning of the prospective amount of input energy according to the respective positioning, parking time, etc.

Referring back to the example of a typical summer day, the open-sky positioning option 114 may have a negative energy balance due to the energy amount provided by the PV integration being more than outbalanced by the energy demand for cooling the cabin. The energy balance of the shaded parking positioning 116 may then be preferrable, because despite the intermediate energy yield of the PV integration in shaded conditions, the demand for cooling the cabin is still lower, so the energy balance being optimized.

Referring to the example of a typical winter day, the open-sky positioning option 114 may have a negative energy balance due to a low position of the sun in the sky which results in a low PV yield, while the energy demand for heating the battery is high. An energy balance of the indoor positioning option 118 may therefore be preferrable, even in view of a zero or low energy provisioning from the photovoltaics. However, depending on the details regarding weather conditions etc., the shaded or wind-protected positioning 116 may be preferrable over the open-sky positioning 114 or indoor positioning 118.

The component 106 may further operate to rank the positioning options according to various criteria, including energy balance. For example, nearby parking place may be preferred, parking place having a charging station may be preferred if charging from a grid be required, etc. User specific preferences may be considered, such as in the neighborhood of preferred shops or other locations.

According to some examples, the component 106 may rank positioning options according to various preferences or criteria such as availability and may only then calculate the energy balance for the remaining subset of positioning options. According to still other examples, such ranking according to criteria, preferences etc. may be triggered already at the beginning of the entire process, i.e., in step 202 or 204, such that the data collection and provisioning component 102 only collects data for the remaining positioning options.

In step 210, the relevant one or more positioning options selected and ranked according to optimum energy balance and/or other criteria are then provided to the provisioning component 108. According to a driving mode of the vehicle, in a manual driving mode the provisioning component may provide the highest-ranked positioning option or options to the driver. A presentation on a display screen 120 may indicate generic positioning options, for example by illustrating them in words, by graphics, icons, etc., such as the graphics 114-118 depicted in Fig. 1. Additionally or alternatively, specific parking places may be indicated on a geographical map, for example, wherein the specific parking places may be available and may conform to highest-ranked generic positioning options.

Taking the above-discussed examples further, on a typical summer day the shaded positioning option 116 may be presented to the driver as a first choice and an indoor positioning 118 as a second choice. On a typical winter day the indoor positioning option 118 may be presented as the first choice, and the wind-protected positioning option 116 may be presented as the second choice.

In a self-driving or autonomous driving mode of the vehicle, the selected and highest-ranked positioning option, as a specific place to drive to, may be provided to an autonomous driving module 122 of the vehicle, such that the module 122 may autonomously drive the vehicle to the indicated place. The selected positioning can additionally be presented on the display 120 for information purpose.

In step 212 the energy management module, routine or tool 200 returns control to a higher-level routine of an energy management system or other control system of the vehicle.

It is recalled that the sequence of steps 204-210 is illustrated and described merely for ease of understanding, and any of the steps may be performed in different order, in parallel, etc. Another example may comprise separate processing for each potential positioning option, including collecting and providing the required input data, calculating input and output energy, energy balance, etc. and comparing the results only at the end. Combinations of sequential and parallel approaches can also be contemplated.

Further embodiments are described in the following, where these embodiments are based on, in part, a different notion and are complementary perspectives. It is accordingly intended that these embodiments may help a further understanding but may not be interpreted as limiting the invention.

Any electric or hybrid electric vehicle (car, truck, boat, plain, train...) that is equipped with photovoltaic panels that can charge an energy storage within the vehicle needs an efficient energy management to maximize the benefit of solar charging. Some scenarios are:
A) The vehicle is connected to a charging device in the evening and not needed until the next evening. The vehicle should not be fully charged by the charging device during the night (or low light period) but only for a certain part. As an example, the vehicle could be charged up to 80% state of charge and the remaining 20% can be charged on next day by the photovoltaic panels to maximize the use of the solar panels.
B) A vehicle equipped with photovoltaic panels will be parked outside a garage more often compared to a conventional vehicle. However, at hot or cold ambient temperatures this can be counterproductive: If on a hot day the vehicle heats up very much the energy for re-cooling the battery or the cabin could be higher than the energy produced by the photovoltaic panels. The same applies for cold ambient temperatures and battery/cabin heating.

Embodiments present an energy and charging management strategy for a vehicle equipped with photovoltaic panels (generally, a system to generate electricity itself/by sun). The system knows when the vehicle is needed next time by user input, app, cloud server, pattern recognition, mobility device or which amount of battery charge should be reserved for solar charging by an adjustable maximum limit. Further the system gets information and forecast about weather data at the vehicle's actual or future position, e.g., by its GPS position and a request from a weather database or by a user input, e.g., by an app. The system calculates when and how much solar charging is possible and can reserve charge therefore by an internal algorithm or a user input. The system knows the efficiencies and dependencies of the individual parts of the battery and the charging system and on-board charger and can optimize the distribution between the different devices (e.g., to avoid low efficiencies from an AC/DC converter at specific current levels, e.g. low currents etc.). The system knows the demand for battery heating and cabin heating or cooling based on the actual temperature, a weather forecast, a user input and determines if and when solar charging makes sense. The system calculates with this information the best time slot and optimal charge reserve for solar charging and implements the calculated energy and charging strategy and schedule. The system informs the user or operator when the vehicle should be positioned in direct/indirect/no sun. In the case of a self-driving/autonomous vehicle, the energy and charging management strategy can request the vehicle to position itself in a suitable position (sunny, shady)

An energy and charging management strategy for a solar electric vehicle can include technical features as follows: Information when the vehicle is needed next time or how much charge is needed at least at the start of the next operation (e.g., by user input, app, mobility device, cloud server, pattern recognition);
Information about GPS position, weather forecast (temperature and sun intensity) either by a request from a database or by user input or an app;
a calculation how much charge can be provided by the photovoltaic panels depending on the provided information;
a calculation how much charge would be needed for battery/cabin heating or cooling or further devices depending on the provided data. This can also include a pre-set or requested cabin/battery temperature by an operator depending on the above-mentioned inputs and calculations;
an algorithm/logic that determines how much energy can and should be generated by the photovoltaic system to maximize solar generated battery charge depending on the above-mentioned inputs and calculations;
an algorithm/logic that determines if it does make sense to position the vehicle outside/in direct sun or if the energy demand for battery and cabin heating and cooling will disproportionately exceed the producible energy by the photovoltaic system depending on the above-mentioned inputs and calculations;
a calculation for an (optimal) charging distribution between an external energy source and the photovoltaic panels depending on the above-mentioned inputs and calculations;
a calculation for an optimal position for the vehicle (direct sun, indirect sun, garage etc...) depending on the above-mentioned inputs and calculations;
in the case of an autonomous or self-driving vehicle, a request to position the vehicle according to the above-mentioned inputs and calculations.

Embodiments can be implemented as a stand-alone energy management control or function, or can be integrated or embedded within existing energy management frameworks, such as in an application, e.g. an according service app of a manufacturer, dealer, or service provider of the vehicle, the PV integration, the battery, or a third party service provider. For example, embodiments described herein can be combined with existing parking assistants and can be combined with other ranking criteria for recommendable parking places, where such criteria may comprise, for example, an orientation of the parked vehicle relative to the sun, an availability of a charging station, etc.

Embodiments described herein improve, amongst others, by taking into account an energy balance of the PV integration. The inventors have found that an energy or power provided by the PV integration, the PV yield, can be counterbalanced and even outbalanced by energy losses or "costs" which have to be paid for the generation of the PV yield. For example, if the vehicle is parked in direct sunlight, this may imply that the battery has to be heated in cold weather conditions or that the cabin has to be cooled in hot weather conditions. As a result, while the PV yield may be optimized, the total energy balance, in the sense of the benefit from the PV integration, may be not. Such situations may appear counterintuitive for the driver and therefore a tool such as described herein is useful and enables, amongst others, the driver to park the vehicle in a positioning which may be counterintuitive but is nevertheless preferable.

Moreover, many prospective parking situations are more complex than cloudless open-sky positions. In general, energy yields and losses depend in complex ways on variations in temperature, cloud conditions, solar incidence, etc. Tools and functionalities discussed herein can make use of forecast data, amongst others, to as far as possible manage such complexities and lead to an optimized energy balance for the PV integration.

### LIST OF REFERENCE SIGNS

- 100: Energy management module
- 102: Input component
- 104: Calculation component
- 106: Selection component
- 108: Provisioning component
- 110: Trigger signal
- 111: Input data
- 112: Weather forecast database
- 114: Open-sky positioning
- 116: Shaded positioning
- 118: Indoor positioning
- 120: Display
- 122: Autonomous driving module
- 200: Operation of energy management module
- 202-212: Method steps

## Claims

1. An energy management method for a vehicle having photovoltaics, PV, at a vehicle body, comprising:
accepting (204) data representing prospective ambient conditions during a parking time of the vehicle;
selecting (208), based on the accepted data, a positioning option from at least two positioning options (114, 116, 118) for the vehicle, wherein the at least two positioning options differ from each other in a prospective amount of direct sunlight impinging on the vehicle during the parking time; and
providing (210) the selected positioning option for achieving, with regard to an energy performance of the PV integration, an optimized energy balance.

2. The energy management method according to claim 1,
wherein the prospective ambient conditions relate to at least one of temperature, wind, cloudiness, sun position.

3. The energy management method according to claim 1 or 2,
wherein accepting data comprises accepting data provided by a weather forecast database (112).

4. The energy management method according to any one of the preceding claims, further comprising:
calculating (206), based on the accepted data, an energy amount prospectively provided by the PV integration during the parking time.

5. The energy management method according to claim 4,
further comprising that the calculated energy amount is reserved for solar charging; and
optionally further comprising implementing an energy and charging strategy including a charging schedule according to the calculated energy amount.

6. The energy management method according to any one of the preceding claims, further comprising:
calculating the energy balance for at least one of the different positioning options (114, 116, 118).

7. The energy management method according to any one of the preceding claims,
wherein the energy balance of the vehicle takes into account desired temperature conditions for at least one of a battery and a cabin of the vehicle.

8. The energy management method according to any one of the preceding claims, further comprising:
calculating, based on the accepted data, an energy demand for at least one of battery heating, battery cooling, cabin heating, and cabin cooling.

9. The energy management method according to any one of the preceding claims,
wherein the positioning options include at least one of a positioning under open sky (114), under direct sunlight, with indirect sunlight, under diffuse light conditions, artificial light conditions, reflected light conditions, wind-protected, shaded (116), indoor (118), garage.

10. The energy management method according to any one of the preceding claims,
wherein selecting a positioning option comprises selecting a shaded positioning (116) based on the prospective ambient conditions for an open-sky positioning (114) resulting in a negative energy balance.

11. The energy management method according to any one of the preceding claims,
wherein selecting a positioning option comprises selecting an indoor positioning (118) based on the prospective ambient conditions for an open-sky positioning (114) resulting in a negative energy balance.

12. The energy management method according to any one of the preceding claims,
wherein providing the selected positioning option comprises at least one of presenting a recommendation to a driver of the vehicle and controlling an autonomous driving of the vehicle.

13. A computer program comprising program code portions for at least one of performing and controlling the method of any one of the preceding claims when the computer program is executed on one or more computing devices.

14. A computer readable medium storing the computer program according to the preceding claim.

15. An energy management module for a vehicle having photovoltaics, PV, at a vehicle body, comprising:
a component (102) configured for accepting data representing prospective ambient conditions during a parking time of the vehicle;
a component (106) configured for selecting, based on the accepted data, a positioning option from at least two positioning options (114, 116, 118) for the vehicle, wherein the at least two positioning options differ from each other in a prospective amount of direct sunlight impinging on the vehicle during the parking time; and
a component (108) configured for providing the selected positioning option for achieving, with regard to an energy performance of the PV integration, an optimized energy balance.
